# EUROPEAN PATENT SPECIFICATION

(11) **EP 3 306 199 B1**
(45) Date of publication and mention of the grant of the patent: **30.12.2020**
(21) Application number: 16192707.4
(22) Date of filing: 06.10.2016
(51) Int. Cl.: F23R 3/60, F23C 6/04

(54) **COMBUSTOR DEVICE FOR A GAS TURBINE ENGINE AND GAS TURBINE ENGINE INCORPORATING SAID COMBUSTOR DEVICE**
BRENNKAMMERVORRICHTUNG FÜR EINEN GASTURBINENMOTOR UND GASTURBINENMOTOR MIT DIESER BRENNKAMMERVORRICHTUNG
DISPOSITIF DE COMBUSTION POUR UN MOTEUR À TURBINE À GAZ ET MOTEUR DE TURBINE À GAZ INTÉGRANT LEDIT DISPOSITIF DE COMBUSTION

(43) Date of publication of application: 11.04.2018
(73) Proprietor: Ansaldo Energia Switzerland AG, 5401 Baden (CH)
(72) Inventor: IMFELD, Jost, 5246 Scherz (CH); SWIATEK, Slawomir, 5300 Turgi (CH); KONRADT, Oliver, 79761 Waldshut-Tiengen (DE)
(74) Representative: Bellemo, Matteo

(56) References cited:
- EP-A1- 1 063 476
- EP-A1- 2 128 524
- EP-A1- 3 015 772
- JP-A- S5 581 230
- US-A1- 2010 126 184

## Description

### TECHNICAL FIELD

The present invention relates to a combustor device for a gas turbine engine and to a gas turbine engine incorporating said combustor device.

More specifically, the present invention preferably relates to combustor device for gas turbines engine with sequential combustion, use to which the following description will make explicit reference purely by way of example and without implying any loss of generality.

### BACKGROUND

As is known, a combustor device for gas turbine engines with sequential combustion generally comprises: a first burner; a first combustion chamber located downstream of the first burner; and a mixer which is located downstream of the first combustion and is structured for admixing a dilution gas to the hot gases leaving the first combustion chamber during operation. Downstream of the mixer, the combustor device moreover comprises a second burner, and a second combustion chamber located downstream of the second burner.

The first burner, the first combustion chamber, the mixer, the second burner and the second combustion chamber are arranged in sequential fluid communication to one another. Fuel is introduced into the first burner via a corresponding first fuel injector, is immediately mixed with compressed air arriving from the multi-stage compressor of the gas turbine engine, and is combusted inside the adjacent first combustion chamber. Additional fuel is introduced into the second burner via a second fuel injector, is mixed with hot gases arriving from the mixer, and is combusted inside the adjacent second combustion chamber.

The high-pressure and high-temperature hot gases leaving the second combustion chamber are channeled to the subsequent multi-stage expansion turbine of the gas turbine engine.

To support both thermal and mechanical stresses, first combustion chamber is generally delimited by a tubular casing usually having a twin-shell structure and which is cooled by a combination of external convection and internal film convection. The first burner is usually located inside the twin-shell tubular casing, at inlet section of said tubular casing.

More specifically, the tubular casing generally includes: a tubular inner member accommodating the first burner and delimiting the first combustion chamber, and a tubular outer member that encloses the inner tubular member slightly spaced from the inner tubular member so as to form an annular interspace which receives compressed air from the multi-stage compressor of the gas turbine engine.

The mixer of combustor device, in turn, basically comprises a roughly-cylindrical, tubular member which is coupled to the distal end of the twin-shell tubular casing for receiving the flow of hot gasses, and is provided with a plenty of pass-through holes allowing the compressed air arriving from compressor of the gas turbine engine to freely enter into the tubular member and therein mix with the hot gasses flowing inside the mixer directed towards the second combustion chamber.

To allow free axial thermal dilatation of the combustor device, the tubular member of the mixer is generally stably coupled to a corresponding supporting structure and is telescopically fitted in axially sliding and angularly rigid manner onto the distal end of the tubular inner member of the twin-shell tubular casing.

More specifically, the tubular inner member of the twin-shell tubular casing is usually provided with a centring annular shoulder that protrudes outwards and stably slidingly abuts on a corresponding, complementary-shaped, annular mating portion of the tubular member of the mixer. This annular shoulder usually has a polygonal profile thus to prevent axial rotation of the twin-shell tubular casing with respect to the tubular member of the mixer and moreover internally accommodates a sealing ring that presses against the inner surface of the same tubular member, at the mating portion of the tubular member.

Unfortunately during normal operation of the gas turbine engine, the various component parts of combustor device are used to move axially back and forth thus causing progressive wear of the area of the inner surface of tubular member of the mixer within the annular mating portion. This worn surface, in the long term, may prevent sealing ring to operate correctly and/or may irreparably damage the sealing ring with all problems that this entail.

EP1063476 A1 discloses a combustor device for a gas turbines engines comprising a first tubular member and second tubular member telescopically fitted in axially sliding manner to one another with the interposition of annular centering and sealing means. These annular centering and sealing means consist of two sealing rings located axially spaced to one another on the downstream end of the first tubular member, and of an outwardly turned flange which is located on the upstream end of the same tubular member.

### DISCLOSURE OF THE INVENTION

Aim of the present invention is to avoid the drawbacks connected to normal wear of the inner surface of supporting body.

In compliance with these aims, according to the present invention there is provided a combustor device for a gas turbine engine comprising a first and a second tubular members telescopically fitted in axially sliding manner to one another with the interposition of annular centering and sealing means which include at least a centring annular shoulder and a sealing ring arranged coaxial to one another; the combustor device being characterized in that said centring annular shoulder and said sealing ring are arranged on the distal end of the first tubular member and in that said sealing ring is axially spaced apart from said centring annular shoulder so that the axial distance between the centring annular shoulder and the sealing ring is greater than the maximum axial movement allowed between said first and said second tubular members.

Preferably, though not necessarily, the combustor device is furthermore characterized in that the centring annular shoulder protrudes outwards from said first tubular member and stably slidingly abuts on a corresponding, complementary-shaped, annular mating portion of the inner surface of the second tubular member.

Preferably, though not necessarily, the combustor device is furthermore characterized in that one of said first and a second tubular members is provided with an annular seat dimensioned to accommodate said sealing ring.

Preferably, though not necessarily, the combustor device is furthermore characterized in that the annular seat is formed on said first tubular member axially spaced apart from said centring annular shoulder, so that the sealing ring and the centring annular shoulder stably abut against the inner surface of said second tubular member at respective annular mating portions spaced apart and separated to one another.

Preferably, though not necessarily, the combustor device is furthermore characterized in that any one of the preceding claims, characterized in that said centring annular shoulder has a polygonal profile, thus to prevent any relative axial rotation of said first and second tubular members.

Preferably, though not necessarily, the combustor device is furthermore characterized in that said first tubular member delimits a first combustion chamber wherein combustion of an inflammable mixture occurs, and moreover internally accommodates a first burner adapted to mix fuel to the compressed air arriving from the compressor of the gas turbines engine for producing said inflammable mixture.

Preferably, though not necessarily, the combustor device is furthermore characterized in that said second tubular member is telescopically fitted to said first tubular member for receiving the hot gasses leaving said first combustion chamber, and is provided with a series of pass-through holes and/or inwardly-protruding pipe fittings allowing a dilution gas present outside of said second tubular member to freely enter into the same second tubular member for diluting the hot gasses flowing inside the second tubular member.

Preferably, though not necessarily, the combustor device is furthermore characterized in that said second tubular member moreover internally accommodates a second burner adapted to mix fuel to the diluted hot gasses flowing inside the second tubular member for producing a second inflammable mixture, and furthermore at least partly delimits a second combustion chamber wherein combustion of said second inflammable mixture occurs.

Preferably according to the present invention there is also provided a gas turbine engine comprising a compressor in which compression of the outside air occurs for producing a flow of compressed air, a combustor assembly in which combustion of a mixture of fuel and compressed air arriving from said compressor occurs for producing a flow of hot gasses, and an expansion turbine in which expansion of the hot gasses arriving from combustor assembly occurs; said gas turbine engine being characterized in that said combustor assembly comprises at least one combustor device comprising a first and a second tubular members telescopically fitted in axially sliding manner to one another with the interposition of annular centering and sealing means which include at least a centring annular shoulder and a sealing ring arranged coaxial to one another; said sealing ring being axially spaced apart from said centring annular shoulder so that the axial distance between the centring annular shoulder and the sealing ring is greater than the maximum axial movement allowed between said first and said second tubular members.

Preferably, though not necessarily, the gas turbine engine is furthermore characterized in that said centring annular shoulder protrudes outwards from said first tubular member and stably slidingly abuts on a corresponding, complementary-shaped, annular mating portion of the inner surface of the second tubular member.

Preferably, though not necessarily, the gas turbine engine is furthermore characterized in that one of said first and a second tubular members is provided with an annular seat dimensioned to accommodate said sealing ring.

Preferably, though not necessarily, the gas turbine engine is furthermore characterized in that the annular seat is formed on said first tubular member axially spaced apart from said centring annular shoulder, so that the sealing ring and the centring annular shoulder stably abut against the inner surface of said second tubular member at respective annular mating portions spaced apart and separated to one another.

Preferably, though not necessarily, the gas turbine engine is furthermore characterized in that said centring annular shoulder has a polygonal profile, thus to prevent any relative axial rotation of said first and second tubular members.

Preferably, though not necessarily, the gas turbine engine is furthermore characterized in that said first tubular member delimits a first combustion chamber wherein combustion of an inflammable mixture occurs, and moreover internally accommodates a first burner adapted to mix fuel to the compressed air arriving from the compressor of the gas turbines engine for producing said inflammable mixture.

Preferably, though not necessarily, the gas turbine engine is furthermore characterized in that said second tubular member is telescopically fitted to said first tubular member for receiving the hot gasses leaving said first combustion chamber, and is provided with a series of pass-through holes and/or inwardly-protruding pipe fittings allowing a dilution gas present outside of said second tubular member to freely enter into the same second tubular member for diluting the hot gasses flowing inside the second tubular member.

Preferably, though not necessarily, the gas turbine engine is furthermore characterized in that said second tubular member moreover internally accommodates a second burner adapted to mix fuel to the diluted hot gasses flowing inside the second tubular member for producing a second inflammable mixture, and furthermore at least partly delimits a second combustion chamber wherein combustion of said second inflammable mixture occurs.

Preferably, though not necessarily, the gas turbine engine is furthermore characterized in that said combustor assembly comprises a number of said combustor devices angularly staggered around the engine shaft of the gas turbine engine.

### BRIEF DESCRIPTION OF THE DRAWINGS

The present invention will now be described with reference to the accompanying drawings, which show a non-limitative embodiment thereof, in which:
- Figure 1 is a schematic section view of part of the central section of a gas turbine engine provided with a number of combustor devices realized according to the teachings of the present invention;
- Figure 2 is a schematic side view of the combustor device shown in Figure 1, with parts in section and parts removed for clarity;
- Figure 3 is an enlarged view of the central section of the combustor device shown in Figure 2, with parts in section and parts removed for clarity.

### DETAILED DESCRIPTION OF THE INVENTION

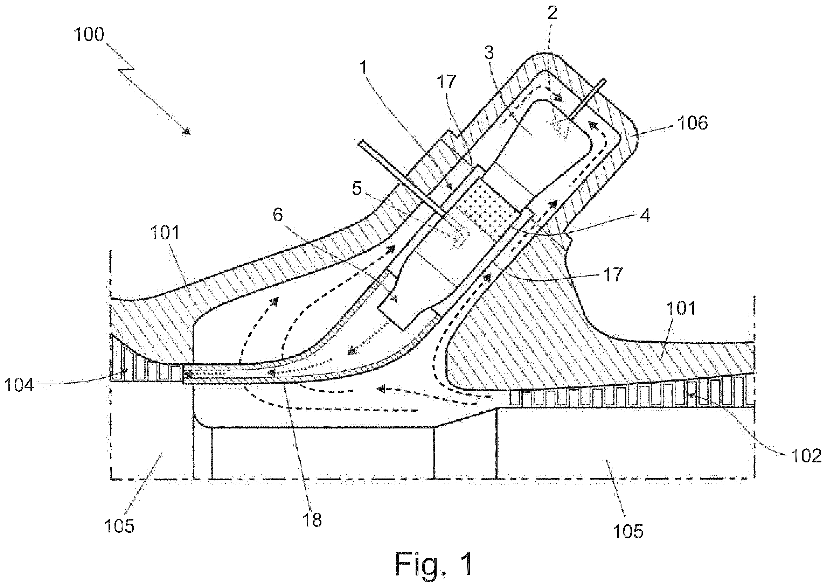

With reference to Figure 1, referral number 1 indicates as a whole a combustor device suitable to be incorporated into a gas turbine engine 100 preferably with sequential combustion which in turn is particularly adapted to drive into rotation a traditional electric generator (not shown).

More in detail, the gas turbine engine 100 preferably basically comprises a roughly-tubular, oblong outer casing 101 and, inside said outer casing 101: a preferably multi-stage, compressor 102 in which compression of the outside air occurs for producing a flow of compressed air; a combustor assembly 103 in which combustion of a mixture of the compressed air arriving from compressor 102 and fuel occurs for producing a flow of hot gasses; and a preferably multi-stage, expansion turbine 104 which is located downstream of combustor assembly 103 and in which expansion of the hot gasses arriving from of the combustor assembly 103 occurs before said hot gasses leave the gas turbine engine 100.

Combustor assembly 103, in turn, comprises at least one combustor device 1, and preferably a number of combustor devices 1 which are preferably angularly staggered around the engine shaft 105 of gas turbine engine 100, immediately downstream of compressor 102.

Overall structure of gas turbine engine 100 is widely known per se, thus no further explanations are required.

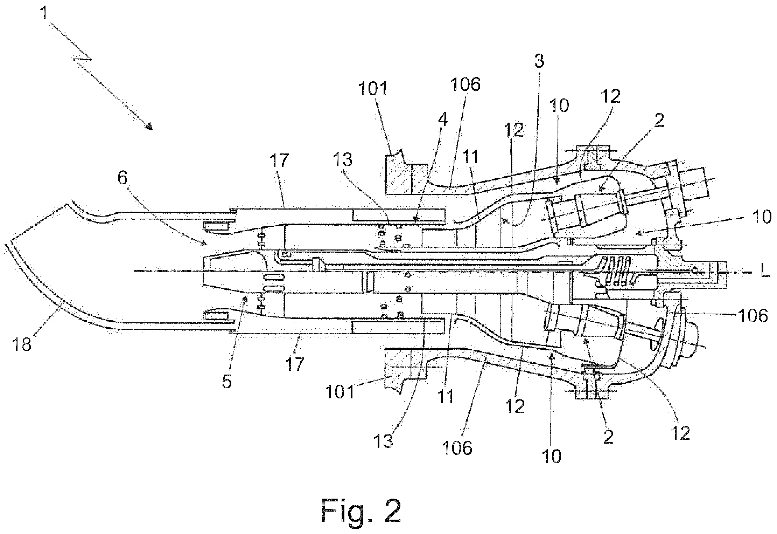

With reference to Figures 1 and 2, each combustor device 1, in turn, basically comprises: a first burner 2, a first combustion chamber 3 and a mixer 4, all substantially aligned to a main longitudinal axis L of combustor device 1 and all arranged in sequential fluid communication to one another.

In burner 2 the compressed air arriving from compressor 102 is mixed to the fuel supplied by a corresponding fuel injector connected to a first fuel supply line for producing an inflammable mixture that is combusted inside the combustion chamber 3 located immediately downstream of burner 2 for producing a flow of hot gasses. The flow of hot gasses leaving combustion chamber 3 then enters into mixer 4 wherein the hot gasses are mixed with dilution gas preferably including compressed air arriving from compressor 102.

Preferably the combustor device 1 additionally comprises: a second burner 5 and a second combustion chamber 6 arranged in sequential fluid communication to one another, downstream of mixer 4, so as to be crossed by the flow of diluted hot gasses leaving mixer 4.

In burner 5 the flow of diluted hot gasses is again mixed to the fuel arriving from a corresponding fuel injector connected to a second fuel supply line for producing a new inflammable mixture that is combusted inside the combustion chamber 6 located immediately downstream of burner 5 for producing further hot gasses.

With reference to Figure 2, in the example shown, in particular, each combustor device 1 is preferably enclosed in a preferably substantially cup-shaped, combustor housing 106 which is designed to surround the burner 2, the combustion chamber 3 and preferably also at least part of the mixer 4, and which is preferably stably coupled to a corresponding flange area of the outer casing 101 of gas turbine engine 100.

More in detail, with reference to Figure 2 the combustor device 1 firstly comprises a main tubular casing 10 which preferably extends coaxial to the longitudinal axis L of combustor device 1, and which houses the one or more burner heads of burner 2 and furthermore delimits the combustion chamber 3 wherein combustion of the inflammable mixture occurs.

Preferably, this tubular casing 10 moreover has a twin-shell structure for being cooled by a combination of external convection and internal film convection.

In other words, the main tubular casing 10 comprises: a tubular inner member 11, commonly referred to as "inner liner", which surrounds the one or more burner heads of burner 2, delimits the combustion chamber 3 and is preferably finally provided with a plurality of effusion holes; and preferably also a tubular outer member 12 that encloses at least the proximal section of the tubular inner member 11 slightly spaced from the tubular inner member 11 so as to form an annular interspace or cavity, and is preferably provided with impingement openings to admit cooling air into the annular interspace between tubular outer member 12 and tubular inner member 11.

Preferably tubular inner member 11 and tubular outer member 12 are furthermore arranged coaxial to one another and to the longitudinal axis L of combustor device 1.

The mixer 4, in turn, preferably comprises a preferably roughly-cylindrical, tubular member 13 which preferably extends substantially coaxial to the longitudinal axis L of combustor device 1, and is telescopically fitted in axially sliding manner onto the preferably roughly-cylindrical, distal end of the tubular casing 10 for receiving the hot gasses leaving the combustion chamber 3. Preferably the tubular member 13 of mixer 4 is moreover provided with a series of pass-through holes and/or inwardly-protruding pipe fittings allowing the dilution gas present outside of tubular member 13, namely the compressed air arriving from compressor 102, to freely enter into the tubular member 13 and therein mix with the hot gasses flowing inside the tubular member 13 directed towards the second burner 5 and the second combustion chamber 6.

More in detail, the mixer 4 is preferably telescopically fitted in axially sliding and preferably also angularly rigid manner onto the preferably roughly-cylindrical, distal end of the tubular inner member 11 of tubular casing 10.

With reference to Figure 2, preferably the distal section of tubular member 13 of mixer 4 moreover houses, downstream of the perforated proximal section of tubular member 13 provided with said pass-through holes and/or inwardly-protruding pipe fittings, the one or more burner heads of burner 5 and furthermore at least partly delimits the combustion chamber 6 wherein combustion of the second inflammable mixture occurs.

In other words, the second burner 5 is preferably located inside the tubular member 13 of mixer 4 and the second combustion chamber 6 is at least partly delimited by the distal section of said tubular member 13.

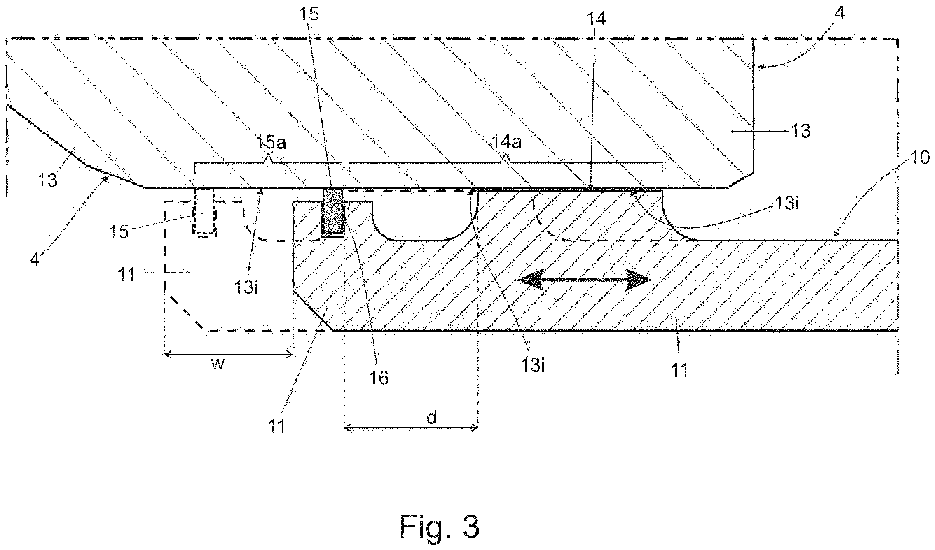

As regards the telescopic coupling, with particular reference to Figure 3, the distal end of tubular casing 10, or better the distal end of tubular inner member 11, is telescopically fitted into the tubular member 13 of mixer 4 in axially sliding and preferably also angularly rigid manner with the interposition of annular centering and sealing means adapted to prevent leakages of hot gasses.

These annular centering and sealing means include at least a centring annular shoulder 14 and a sealing ring 15 or similar annular sealing member, which are arranged coaxial to one another and which are axially spaced apart to one another so that the axial distance d between the centring annular shoulder 14 and the sealing ring 15 is greater than the maximum axial movement w allowed between the tubular member 13 of mixer 4 and the tubular inner member 11 of tubular casing 10.

More in detail, the centring annular shoulder 14 preferably protrudes outwards from tubular inner member 11, at the distal end of tubular casing 10, while remaining coaxial to the longitudinal axis of tubular inner member 11, i.e. preferably coaxial to the longitudinal axis L, and stably slidingly abuts on a corresponding, complementary-shaped, annular mating portion 14a of the inner surface 13i of tubular member 13 thus to keep the tubular inner member 11 coaxial to tubular member 13.

Preferably the centring annular shoulder 14 moreover has a polygonal profile, thus to prevent any axial rotation of the tubular member 13 with respect to tubular inner member 11, about the longitudinal axis of the same tubular inner member 11.

The sealing ring 15, in turn, is fitted onto the tubular inner member 11, at the distal end of tubular casing 10, axially spaced apart from the centring annular shoulder 14 so as to stably press/abut against the inner surface 13i of tubular member 13 for preventing leakages of hot gasses.

The axial distance between the sealing ring 15 and the centring annular shoulder 14 is greater than the maximum axial movement w allowed between the tubular inner member 11 and the tubular member 13. Therefore the sealing ring 15 abuts against the inner surface 13i of tubular member 13 within a corresponding annular mating portion 15a which is spaced apart and separated from the annular mating portion 14a.

More in detail, with particular reference to Figure 3, in the example shown the distal end of the tubular casing 10, or better the distal end of the tubular inner member 11, is preferably additionally provided with an annular seat 16 which is coaxial to the longitudinal axis of tubular inner member 11, and is directly faced to the inner surface 13i of tubular member 13. This annular seat 16 is formed on the tubular inner member 11 at a minimum axial distance d from the centring annular shoulder 14 greater that the maximum axial movement w allowed between the tubular inner member 11 and the tubular member 13, and is specifically shaped/dimensioned to stably accommodate the sealing ring 15 or similar annular sealing member.

With reference to Figures 1 and 2, preferably the combustor device 1 moreover comprises: a second tubular casing or jacket 17 that encloses the tubular member 13 of mixer 4 slightly spaced from the same tubular member 13, preferably so as to form an annular interspaced or cavity wherein the compressed air arriving from compressor 102 flows; and preferably also a transient duct 18 which is telescopically fitted onto the distal section of the tubular member 13 of mixer 4 and preferably also onto the distal section of tubular jacket 17, and is designed to channel the flow of hot gasses leaving the combustion chamber 7 towards the expansion turbine 104.

Preferably the tubular member 13 is furthermore telescopically fitted in axially sliding and angularly rigid manner into the second tubular casing or jacket 17.

Furthermore the second tubular casing or jacket 17 is preferably firmly coupled to a supporting member (not shown) integrally formed with the combustor housing 106 and/or with the outer casing 101 of gas turbine engine 100, and preferably directly supports the tubular member 13 of mixer 4.

General operation of combustor device 1 is similar to that of a combustor device of a traditional gas turbine engine with sequential combustion.

As regards the telescopic coupling between the distal end of tubular casing 10 and mixer 4, during transient working conditions of combustor device 1 the tubular inner member 11 of tubular casing 10 is used to move axially inside the tubular member 13 of mixer 4 due to different thermal conditions and different axial coefficients of thermal expansion.

The resulting reciprocating axial movement of the two components causes the centring annular shoulder 14 to wear the inner surface 13i of tubular member 13 at the annular mating portion 14a. The sealing ring 15, in turn, slides back and forth while resting on a different portion of the inner surface 13i of tubular member 13, i.e. the annular mating portion 15a, separated and spaced apart from the annular mating portion 14a.

Since the axial distance d between the centring annular shoulder 14 and the sealing ring 15, or better the annular seat 16 accommodating the sealing ring 15, is greater than the maximum axial movement w allowed between the tubular inner member 11 of tubular casing 10 and the tubular member 13 of mixer 4, the annular mating portion 15a never overlaps/intersects the annular mating portion 14a.

The advantages resulting from the particular telescopic coupling between the distal end of the tubular inner member 11 of tubular casing 10 and the tubular member 13 of mixer 4 are large in number.

First of all, the annular mating portion 15a of inner surface 13i of tubular member 13 now perfectly copies the profile of sealing ring 15 and not that of the centring annular shoulder 14, thus significantly increasing working life of sealing ring 15.

Furthermore the huge distance between the centring annular shoulder 14 and the spaced-apart sealing ring 15 gives to the telescopic coupling and increased stability.

Clearly, changes may be made to the combustor device 1 and to the gas turbine engine 100 without, however, departing from the scope of the present invention.

For example, a telescopic coupling using a centring annular shoulder 14 and an axially spaced-apart sealing ring 15 may be used also between the tubular member 13 of mixer 4 and second tubular casing or jacket 17, or between the distal section of tubular member 13 and the inlet of transient duct 18. Obviously the axial distance d between the centring annular shoulder 14 and the sealing ring 15 has to be greater than the allowed maximum axial movement w between the two components.

## Claims

1. Combustor device (1) for a gas turbines engines (100) comprising a first (11) and a second (13) tubular members telescopically fitted in axially sliding manner to one another with the interposition of annular centering and sealing means (14, 15) which include at least a centring annular shoulder (14) and a sealing ring (15) arranged coaxial to one another;
the combustor device (1) being **characterized in that** said centring annular shoulder (14) and said sealing ring (15) are arranged on the distal end of the first tubular member (11), and **in that** said sealing ring (15) is axially spaced apart from said centring annular shoulder (14) so that the axial distance (d) between the centring annular shoulder (14) and the sealing ring (15) is greater than the maximum axial movement (w) allowed between said first (11) and said second (13) tubular members.

2. Combustor device according to Claim 1, **characterized in that** the centring annular shoulder (14) protrudes outwards from said first tubular member (11) and stably slidingly abuts on a corresponding, complementary-shaped, annular mating portion (14a) of the inner surface (13i) of the second tubular member (13).

3. Combustor device according to Claim 1 or 2, **characterized in that** one (11) of said first (11) and a second (13) tubular members is provided with an annular seat (16) dimensioned to accommodate said sealing ring (15) .

4. Combustor device according to Claim 3, **characterized in that** the annular seat (16) is formed on said first tubular member (11) axially spaced apart from said centring annular shoulder (14), so that the sealing ring (15) and the centring annular shoulder (14) stably abut against the inner surface (13i) of said second tubular member (13) at respective annular mating portions (14a, 15a) spaced apart and separated to one another.

5. Combustor device according to any one of the preceding claims, **characterized in that** said centring annular shoulder (14) has a polygonal profile, thus to prevent any relative axial rotation of said first (11) and second (13) tubular members.

6. Combustor device according to any one of the preceding claims, **characterized in that** said first tubular member (11) delimits a first combustion chamber (3) wherein combustion of an inflammable mixture occurs, and moreover internally accommodates a first burner (2) adapted to mix fuel to the compressed air arriving from the compressor (102) of the gas turbines engine (100) for producing said inflammable mixture.

7. Combustor device according to Claim 6, **characterized in that** said second tubular member (13) is telescopically fitted to said first tubular member (11) for receiving the hot gasses leaving said first combustion chamber (3), and is provided with a series of pass-through holes and/or inwardly-protruding pipe fittings allowing a dilution gas present outside of said second tubular member (13) to freely enter into the same second tubular member (13) for diluting the hot gasses flowing inside the second tubular member (13).

8. Combustor device according to Claim 6 or 7, **characterized in that** said second tubular member (13) moreover internally accommodates a second burner (5) adapted to mix fuel to the diluted hot gasses flowing inside the second tubular member (13) for producing a second inflammable mixture, and furthermore at least partly delimits a second combustion chamber (6) wherein combustion of said second inflammable mixture occurs.

9. Gas turbine engine (100) comprising a compressor (102) in which compression of the outside air occurs for producing a flow of compressed air, a combustor assembly (103) in which combustion of a mixture of fuel and compressed air arriving from said compressor (102) occurs for producing a flow of hot gasses, and an expansion turbine (104) in which expansion of the hot gasses arriving from combustor assembly (103) occurs; said gas turbine engine (100) being **characterized in that** said combustor assembly (103) comprises at least one combustor device (1) according to any one of Claims 1-8.

10. Gas turbine engine according to Claim 9, **characterized in that** said combustor assembly (103) comprises a number of said combustor devices (1) angularly staggered around the engine shaft (105) of the gas turbine engine (100).

## Patentansprüche

1. Brennervorrichtung (1) für eine Gasturbinenmaschine (100) mit einem ersten (11) und einem zweiten (13) rohrförmigen Element, die teleskopartig axial gleitend aneinander befestigt sind, wobei dazwischen ringförmige Zentrier- und Dichtmittel (14, 15) angeordnet sind, die wenigstens eine ringförmige Zentrierschulter (14) und einen Dichtungsring (15) aufweisen, die koaxial zueinander angeordnet sind;
wobei die Brennervorrichtung (1) **dadurch gekennzeichnet ist, dass** die ringförmige Zentrierschulter (14) und der Dichtungsring (15) am distalen Ende des ersten rohrförmigen Elements (11) angeordnet sind,
und dass der Dichtungsring (15) von der ringförmigen Zentrierschulter (14) axial beabstandet ist, so dass der axiale Abstand (d) zwischen der ringförmigen Zentrierschulter (14) und dem Dichtungsring (15) größer ist als die maximal zulässige axiale Bewegung (w) zwischen dem ersten (11) und dem zweiten (13) rohrförmigen Element.

2. Brennervorrichtung nach Anspruch 1, **dadurch gekennzeichnet, dass** die ringförmige Zentrierschulter (14) von dem ersten rohrförmigen Element (11) nach außen hervorsteht und an einem entsprechenden, komplementär geformten, ringförmigen Fügeabschnitt (14a) der Innenfläche (13i) des zweiten rohrförmigen Elements (13) stabil gleitend anliegt.

3. Brennervorrichtung nach Anspruch 1 oder 2, **dadurch gekennzeichnet, dass** eines (11) des ersten (11) und des zweiten (13) rohrförmigen Elements mit einem ringförmigen Sitz (16) versehen ist, der zur Aufnahme des Dichtungsrings (15) bemessen ist.

4. Brennervorrichtung nach Anspruch 3, **dadurch gekennzeichnet, dass** der ringförmige Sitz (16) an dem ersten rohrförmigen Element (11) axial beabstandet von der ringförmigen Zentrierschulter (14) ausgebildet ist, so dass der Dichtungsring (15) und die ringförmige Zentrierschulter (14) an der Innenfläche (13i) des zweiten rohrförmigen Elements (13) an jeweiligen ringförmigen Fügeabschnitten (14a, 15a), die voneinander beabstandet und voneinander getrennt sind, stabil anliegen.

5. Brennervorrichtung nach einem der vorangehenden Ansprüche, **dadurch gekennzeichnet, dass** die ringförmige Zentrierschulter (14) ein polygonales Profil aufweist, um so jede relative axiale Drehung des ersten (11) und des zweiten (13) rohrförmigen Elements zu verhindern.

6. Brennervorrichtung nach einem der vorangehenden Ansprüche, **dadurch gekennzeichnet, dass** das erste rohrförmige Element (11) eine erste Brennkammer (3) begrenzt, in der die Verbrennung eines entflammbaren Gemisches stattfindet, und außerdem im Inneren einen ersten Brenner (2) enthält, der dazu ausgelegt ist, der von einem Kompressor (102) der Gasturbinenmaschine (100) kommenden komprimierten Luft Brennstoff beizumischen, um das entflammbare Gemisch zu erzeugen.

7. Brennervorrichtung nach Anspruch 6, **dadurch gekennzeichnet, dass** das zweite rohrförmige Element (13) teleskopartig an dem ersten rohrförmigen Element (11) befestigt ist, um die heißen Gase aufzunehmen, die die erste Brennkammer (3) verlassen, und mit einer Reihe von Durchgangslöchern und/oder nach innen hervorstehenden Rohranschlüssen versehen ist, die es einem außerhalb des zweiten rohrförmigen Elements (13) vorhandenen Verdünnungsgas ermöglichen, frei in dasselbe zweite rohrförmige Element (13) einzutreten, um die in dem zweiten rohrförmigen Element (13) strömenden heißen Gase zu verdünnen.

8. Brennervorrichtung nach Anspruch 6 oder 7, **dadurch gekennzeichnet, dass** das zweite rohrförmige Element (13) außerdem im Inneren einen zweiten Brenner (5) enthält, der dazu ausgelegt ist, den innerhalb des zweiten rohrförmigen Elements (13) strömenden verdünnten heißen Gasen Brennstoff beizumischen, um ein zweites entflammbares Gemisch zu erzeugen, und ferner wenigstens teilweise eine zweite Brennkammer (6) begrenzt, in der die Verbrennung des zweiten entflammbaren Gemisches stattfindet.

9. Gasturbinenmaschine (100) mit einem Kompressor (102), in dem eine Kompression der Außenluft zur Erzeugung eines Strom an komprimierter Luft erfolgt, einer Brenneranordnung (103), in der eine Verbrennung eines aus dem Kompressor (102) kommenden Gemisches aus Brennstoff und komprimierter Luft zur Erzeugung eines Stroms heißer Gase erfolgt, und einer Expansionsturbine (104), in der eine Expansion der aus der Brenneranordnung (103) kommenden heißen Gase erfolgt; wobei die Gasturbinenmaschine (100) **dadurch gekennzeichnet ist, dass** die Brenneranordnung (103) wenigstens eine Brennervorrichtung (1) nach einem der Ansprüche 1 bis 8 umfasst.

10. Gasturbinenmaschine nach Anspruch 9, **dadurch gekennzeichnet, dass** die Brenneranordnung (103) eine Anzahl der Brennervorrichtungen (1) umfasst, die um die Maschinenwelle (105) der Gasturbinenmaschine (100) herum winkelmäßig gestaffelt sind.

## Revendications

1. Dispositif de combustion (1) pour un moteur de turbine à gaz (100) comprenant un premier (11) et un second (13) élément tubulaire montés, par voie télescopique, d'une manière axialement coulissante l'un dans l'autre, avec l'interposition de moyens de centrage et d'étanchéité annulaires (14, 15) qui comprennent au moins un épaulement annulaire de centrage (14) et une bague d'étanchéité (15) agencés de manière coaxiale l'un par rapport à l'autre,
le dispositif de combustion (1) étant **caractérisé en ce que** ledit épaulement annulaire de centrage (14) et ladite bague d'étanchéité (15) sont agencés sur l'extrémité distale du premier élément tubulaire (11),
et **en ce que** ladite bague d'étanchéité (15) est axialement espacée dudit épaulement annulaire de centrage (14) de sorte que la distance axiale (d) entre l'épaulement annulaire de centrage (14) et la bague d'étanchéité (15) est supérieure au mouvement axial maximum (w) autorisé entre ledit premier (11) et ledit second (13) élément tubulaire.

2. Dispositif de combustion selon la revendication 1, **caractérisé en ce que** l'épaulement annulaire de centrage (14) fait saillie vers l'extérieur à partir dudit premier élément tubulaire (11) et vient en butée de manière stable et coulissante sur une partie de couplage annulaire (14a) de forme complémentaire correspondante de la surface interne (13i) du second élément tubulaire (13).

3. Dispositif de combustion selon la revendication 1 ou 2, **caractérisé en ce que** l'un (11) dudit premier (11) et d'un second (13) élément tubulaire est prévu avec un siège annulaire (16) dimensionné pour loger ladite bague d'étanchéité (15).

4. Dispositif de combustion selon la revendication 3, **caractérisé en ce que** le siège annulaire (16) est formé sur ledit premier élément tubulaire (11) axialement espacé dudit épaulement annulaire de centrage (14), de sorte que la bague d'étanchéité (15) et l'épaulement annulaire de centrage (14) viennent en butée, de manière stable, contre la surface interne (13i) dudit second élément tubulaire (13) au niveau des parties de couplage annulaires (14a, 15a) respectives espacées et séparées l'une de l'autre.

5. Dispositif de combustion selon l'une quelconque des revendications précédentes, **caractérisé en ce que** ledit épaulement annulaire de centrage (14) a un profil polygonal, pour empêcher ainsi toute rotation axiale relative dudit premier (11) et du second (13) élément tubulaire.

6. Dispositif de combustion selon l'une quelconque des revendications précédentes, **caractérisé en ce que** ledit premier élément tubulaire (11) délimite une première chambre de combustion (3) dans laquelle la combustion d'un mélange inflammable se produit, et de plus loge, intérieurement, un premier brûleur (2) adapté pour mélanger le combustible à l'air comprimé arrivant du compresseur (102) du moteur de turbine à gaz (100) pour produire ledit mélange inflammable.

7. Dispositif de combustion selon la revendication 6, **caractérisé en ce que** ledit second élément tubulaire (13) est monté, par voie télescopique, sur ledit premier élément tubulaire (11) pour recevoir les gaz chauds quittant ladite première chambre de combustion (3), et est prévu avec une série de trous traversants et/ou de raccords de tuyau en saillie vers l'intérieur permettant à un gaz de dilution présent à l'extérieur dudit second élément tubulaire (13) de pénétrer librement dans ledit second élément tubulaire (13) pour diluer les gaz chauds s'écoulant à l'intérieur du second élément tubulaire (13).

8. Dispositif de combustion selon la revendication 6 ou 7, **caractérisé en ce que** ledit second élément tubulaire (13) loge intérieurement en outre un second brûleur (5) adapté pour mélanger le combustible aux gaz chauds dilués s'écoulant à l'intérieur du second élément tubulaire (13) pour produire un second mélange inflammable, et en outre délimite au moins partiellement une seconde chambre de combustion (6) dans laquelle la combustion dudit second mélange inflammable a lieu.

9. Moteur de turbine à gaz (100) comprenant un compresseur (102) dans lequel la compression de l'air extérieur a lieu pour produire un écoulement d'air comprimé, un ensemble de chambre de combustion (103) dans lequel la combustion d'un mélange de combustible et d'air comprimé arrivant dudit compresseur (102) a lieu pour produire un écoulement des gaz chauds, et une turbine d'expansion (104) dans laquelle l'expansion des gaz chauds arrivant de l'ensemble de chambre de combustion (103) a lieu ;
ledit moteur de turbine à gaz (100) étant **caractérisé en ce que** ledit ensemble de chambre de combustion (103) comprend au moins un dispositif de combustion (1) selon l'une quelconque des revendications 1 à 8.

10. Moteur de turbine à gaz selon la revendication 9, **caractérisé en ce que** ledit ensemble de chambre de combustion (103) comprend un certain nombre desdits dispositifs de combustion (1) montés angulairement en quinconce autour de l'arbre de moteur (105) du moteur de turbine à gaz (100).
